# EUROPÄISCHE PATENTANMELDUNG

(11) **EP 2 119 341 A2**
(43) Veröffentlichungstag der Anmeldung: **18.11.2009**
(21) Anmeldenummer: 09158928.3
(22) Anmeldetag: 28.04.2009
(51) Int. Cl.: A01D 89/00

(54) **Erntevorsatz mit einem Gutaufnehmer und einer Querförderschnecke**

(30) Priorität: 14.05.2008 DE 102008001779
(71) Anmelder: Maschinenfabrik Kemper GmbH & Co. KG, 48703 Stadtlohn (DE)
(72) Erfinder: Schmöning, Christoph, 45721, Haltern am See (DE)
(74) Vertreter: Holst, Sönke

(57) **Zusammenfassung**

Die Erfindung bezieht sich auf einen Erntevorsatz (20) mit einem einen Gutaufnehmer (34) und eine Querförderschnecke (36) tragenden Gestell (32) und einem Verstellantrieb (60), mit dem der Gutaufnehmer (34) um eine sich horizontal und quer zur Vorwärtsrichtung erstreckende Schwenkachse (58) gegenüber dem Gestell (32) zwischen einer ersten Stellung, in welcher der Gutaufnehmer (34) aufgenommenes Erntegut an die Querförderschnecke (36) übergeben kann, und einer zweiten Stellung bewegbar ist, in welcher er gegenüber der ersten Stellung nach unten verlagert ist. In der zweiten Stellung behindert der Gutaufnehmer (34) den Auswurf von Erntegut nicht nennenswert, wenn die Querförderschnecke (36) reversiert.

## Beschreibung

Die Erfindung betrifft einen Erntevorsatz mit einem einen Gutaufnehmer und eine Querförderschnecke tragenden Gestell und einem Verstellantrieb, mit dem der Gutaufnehmer gegenüber dem Gestell zwischen einer ersten Stellung, in welcher der Gutaufnehmer aufgenommenes Erntegut an die Querförderschnecke übergeben kann, und einer zweiten Stellung bewegbar ist, in welcher er gegenüber der ersten Stellung nach unten verlagert ist.

### Stand der Technik

Erntevorsätze mit Gutaufnehmern werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Gutaufnehmer umfassen üblicherweise an sich quer zur Vorwärtsrichtung erstreckenden Zinkenträgern angebrachte Zinken. Die Zinkenträger werden in Bewegung versetzt, indem ein sie abstützender Halter in Rotation versetzt wird. Die Zinken erstrecken sich durch Zwischenräume, die zwischen am Gestell des Gutaufnehmers angebrachten Abstreifern verbleiben, nach außen und bewegen sich entlang dieser Zwischenräume. Die Zinkenträger können durch Kurven- oder Nockenbahnen gesteuert werden (US 2 388 212 A), so dass sich die Winkelstellung der Zinkenträger während des Umlaufs ändert, um das Erntegut möglichst aggressiv annehmen zu können und sich am Abgabepunkt in den Innenraum der Abstreifer zurückziehen zu können, oder sie sind ungesteuert, d. h. starr mit dem Halter verbunden (EP 0 903 077 A). Stromab der Zinken ist üblicherweise ein sich parallel zur Längsachse der Zinkenträger erstreckender Querförderer in Form einer Förderschnecke vorgesehen, der das Erntegut seitlich zusammenführt und an die eigentliche Erntemaschine übergibt.

Nach einem Gutstau oder wenn ein in die Erntemaschine eingedrungener Fremdkörper durch einen Metalldetektor nachgewiesen wird, ist es wünschenswert, den Erntevorsatz zu reversieren, d. h. in einer gegenüber der Erntegutaufnahme umgekehrten Richtung anzutreiben. Übliche Gutaufnehmer lassen sich jedoch nicht reversieren, da sich die Zinken am Gehäuse verhaken würden. Die DE 10 2005 020 463 A schlägt vor, im rückwärtigen Bereich der Zinken eine Leiteinrichtung vorzusehen, die die Zinken bei einem Reversieren des Aufnahmerotors in die Zwischenräume zwischen den Abstreifern leitet. In der DE 10 2006 027 078 A wird vorgeschlagen, eine Überlastkupplung im Antriebsstrang des reversierbaren Gutaufnehmers vorzusehen, die beim Reversieren ein kleineres Abschaltmoment hat als beim normalen Erntebetrieb. Derartige reversierbare Gutaufnehmer sind jedoch aufwändiger als konventionelle, nicht reversierbare Gutaufnehmer aufgebaut und daher kostspieliger.

Es wurde weiterhin vorgeschlagen, nur die Querförderschnecke zu reversieren und sie beim Reversieren anzuheben, um Gutstaus zu vermeiden (EP 0 993 766 A) oder zum Reversieren den ganzen Erntevorsatz gegenüber dem Einzugskanal der Erntemaschine anzuheben, so dass das Erntegut zwischen dem Erntevorsatz und dem Einzugskanal auf den Boden fällt (EP 1 169 907 A).

Weiterhin wurde vorgeschlagen, den Gutaufnehmer einer Ballenpresse (US 40 43 099 A) oder eines gezogenen Feldhäckslers (EP 0 119 658 A) zum Straßentransport um eine Schwenkachse nach oben zu verschwenken. Die als gattungsbildend angesehene EP 1 741 330 A schlägt vor, den Gutaufnehmer gegenüber der Querförderschnecke bewegbar zu gestalten, indem er mittels eines Hydraulikzylinders in einer sich schräg nach unten und vorn erstreckenden Richtung verschoben wird. Dadurch soll die Position des Gutaufnehmers an den jeweiligen Erntegutdurchsatz angepasst werden.

Die EP 0 403 899 A schlägt vor, einen oberhalb des Gutaufnehmers angeordneten Niederhalter beim Reversieren selbsttätig anzuheben, um zu verhindern, dass sich dann zwischen dem Niederhalter und dem Gutaufnehmer ein Erntegutstau bildet.

### Aufgabe

Das der Erfindung zu Grunde liegende Problem wird darin gesehen, einen Erntevorsatz mit einem Gutaufnehmer und einer stromab des Gutaufnehmers angeordneten Querfördereinrichtung bereitzustellen, bei dem mit einfach und kostengünstig realisierbaren Mitteln ein nicht staugefährdetes Reversieren der Querfördereinrichtung ermöglicht wird.

### Lösung

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Ein Erntevorsatz in der Art einer Pick-up umfasst ein Gestell, an dem eine Querförderschnecke befestigt ist. Weiterhin ist am Gestell ein Gutaufnehmer um eine sich horizontal und quer zur Vorwärtsrichtung, in welcher der Erntevorsatz beim normalen Erntebetrieb über ein Feld bewegt wird, verlaufende Schwenkachse schwenkbar angelenkt. Ein Verstellantrieb dient zum Verschwenken des Gutaufnehmers um die Schwenkachse, so dass letzterer zwischen einer ersten, zum Erntebetrieb dienenden Stellung, in der der Gutaufnehmer von ihm aufgenommenes Erntegut an die Querförderschnecke übergibt, und einer zweiten Stellung verschwenkbar ist, in welcher der Gutaufnehmer derart weit nach unten verschwenkt ist, dass ein unproblematischer Reversierbetrieb der Querförderschnecke möglich ist, ohne dass der Gutaufnehmer den Abfluss des von der Querförderschnecke ausgestoßenen Erntegutes in einem nennenswerten Maße oder überhaupt nicht behindert.

Auf diese Weise erreicht man mit einfachen Mitteln ein unproblematisches Reversieren des Erntevorsatzes. Ein Reversieren des eigentlichen Gutaufnehmers ist nicht erforderlich, wäre aber grundsätzlich denkbar.

Bei einer bevorzugten Ausführungsform der Erfindung ist der Verstellantrieb mit einer Steuerung gekoppelt, die weiterhin mit einem Reversierantrieb der Querförderschnecke und einem Höhenverstellantrieb des Erntevorsatzes verbunden ist. Vor einer Reversierung der Querförderschnecke veranlasst die Steuerung selbsttätig zuerst den Höhenverstellantrieb, den Erntevorsatz anzuheben. Dadurch wird verhindert, dass der Gutaufnehmer auf dem Erdboden aufschlägt und beschädigt wird. Anschließend oder gleichzeitig veranlasst die Steuerung den Verstellantrieb, den Gutaufnehmer in die zweite Stellung zu verbringen. Schließlich veranlasst die Steuerung, dass der Reversierantrieb die Querförderschnecke reversiert. Der Reversiervorgang kann durch den Bediener ausgelöst werden, oder er wird von einem Detektor veranlasst, der mit der Steuerung gekoppelt ist und einen Erntegutstau im Erntevorsatz und/oder im Einzugskanal der Erntemaschine und/oder einen in den Einzugskanal der Erntemaschine eingedrungenen Fremdkörper nachweisen kann. Nach Ende des Reversiervorgangs kann die Steuerung auf Veranlassung des Bedieners oder selbsttätig, z. B. nach Ablauf einer vorbestimmten Reversierzeit oder nachdem der Detektor nachgewiesen hat, dass der Fremdkörper wieder aus dem Einzugskanal der Erntemaschine hinausgefördert wurde, den Erntebetrieb einleiten, in dem die erwähnten Schritte in umgekehrter Reihenfolge und Richtung durchgeführt werden. Die Querförderschnecke wird demnach angehalten, der Gutaufnehmer in die erste Stellung verbracht und der Erntevorsatz abgesenkt, bevor der Erntevorgang wieder aufgenommen wird.

Der erfindungsgemäße Gutaufnehmer kann an beliebigen landwirtschaftlichen Erntemaschinen verwendet werden, beispielsweise Feldhäckslern, Ladewagen, Mähdreschern oder Ballenpressen.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einem Erntevorsatz, der einen Gutaufnehmer und eine Querfördereinrichtung umfasst, die sich in der Erntebetriebsstellung befinden, und
- Fig. 2: eine Seitenansicht des Erntevorsatzes aus Figur 1 in einer zum Reversieren geeigneten Stellung.

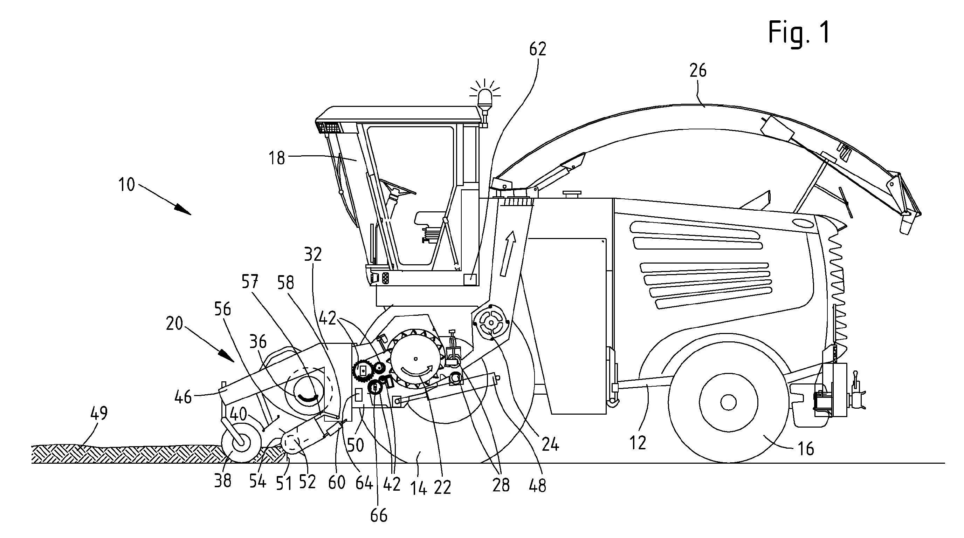

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Erntegut, z. B. Gras oder dergleichen, wird über einen Einzugsförderer 42 mit Vorpresswalzen, die innerhalb eines den Erntevorsatz 20 abnehmbar tragenden Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 befindet sich eine Nachzerkleinerungsvorrichtung 28 mit zwei Körnerprozessorwalzen, durch die das zu fördernde Gut der Fördervorrichtung 24 tangential zugeführt wird.

Der Erntevorsatz 20 ist als so genannte Pick-up ausgebildet. Der Erntevorsatz 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe des Erntevorsatzes 20 besteht darin, auf dem Boden eines Felds verstreut oder in einem Schwad 49 abgelegtes Erntegut aufzunehmen und es der Erntemaschine 10 zur weiteren Bearbeitung zuzuführen. Hierzu wird der Erntevorsatz 20 während des Erntebetriebes mit geringem Abstand zum Erdboden über das Feld bewegt, während er zum Transport auf einer Strasse oder auf Wegen mittels eines Höhenverstellantriebs 48 in Form eines Hydraulikzylinders angehoben wird, welcher das Einzugsgehäuse 50 und den daran befestigten Erntevorsatz 20 um die Drehachse der Häckseltrommel 22 verschwenkt. Der Höhenverstellantrieb 48 dient auch zur Einstellung der Höhe des Gutaufnehmers 20 über dem Boden, bzw. zur Einstellung des Auflagedrucks der Stützräder 38 auf dem Erdboden. Zum Erntevorsatz 20 gehört eine Querförderschnecke 36, die das aufgenommene Gut von den Seiten des Erntevorsatzes 20 zu einer in der Mitte gelegenen, nicht gezeigten Abgabeöffnung fördert, hinter der der Einzugsförderer 42 folgt. Der Erntevorsatz 20 weist auch einen (wie die Querförderschnecke 36) rotativ angetriebenen Gutaufnehmer 34 auf, der unterhalb des Abgabeförderers 36 angeordnet ist und mit seinen Zinken 51 das Gut vom Erdboden anhebt, um es dem Abgabeförderer 36 zu übergeben. Außerdem ist ein Niederhalter 40 in Form eines über dem Gutaufnehmer 34 angeordneten Bleches am Gestell 32 befestigt.

Im Folgenden beziehen sich Richtungsangaben, wie seitlich, unten und oben, auf die Vorwärtsbewegungsrichtung V des Erntevorsatzes 20, die in den Figuren nach links verläuft.

Der Gutaufnehmer 34 umfasst einen Rotor 52, an dem die Zinken 51 durch Zinkenträger (nicht gezeigt) befestigt sind. Es kann sich um gesteuerte (d. h. der Winkel der Zinkenträger gegenüber dem Rotor 52 ändert sich während des Umlaufs, gesteuert durch Nockenbahnen oder Kurvenscheiben) oder ungesteuerte (d. h. die Zinkenträger sind starr mit dem Rotor 52 verbunden) Zinkenträger handeln. Der Rotor 52 ist innerhalb eines ihn zu allen Seiten hin umschließenden Gehäuses 54 angeordnet, das unter-, vorder- und oberseitig Schlitze umfasst, durch die sich die Zinken 51 nach außen erstrecken. Das Gehäuse 54 umfasst weiterhin ein oberseitiges Deckblech 56, das sich in Figur 1 bis zu einem Endpunkt erstreckt, der sich unterhalb der Querförderschnecke 36 und rückwärtig von deren Achse befindet. Rückwärtig des Deckblechs 56 folgt ein am Gestell 32 befestigtes Bodenblech, an dessen Oberseite das Erntegut zur Abgabeöffnung des Erntevorsatzes 20 gefördert wird. Das Gehäuse 54 ist durch zwei an seinen seitlichen Enden angeordnete Schwingen 57 um eine sich horizontal und quer zur Vorwärtsrichtung erstreckende Schwenkachse 58 am Gestell 32 angelenkt. Die Schwenkachse 58 befindet sich etwa in Höhe der Unterkante der Querförderschnecke 36 und unterhalb ihrer rückwärtigen Kante. Ein Verstellantrieb 60 in Form eines einfach-oder doppelt wirkenden Hydraulikzylinders ist einen Endes am unteren, rückwärtigen Ende des Gestells 32 und anderen Endes am rückwärtigen, unteren Ende des Gehäuses 54 des Gutaufnehmers 34 angelenkt. Der Verstellantrieb 60 und der Höhenverstellantrieb 48 sind mit einer Steuerung 62 verbunden, die weiterhin mit einem Reversierantrieb 64 gekoppelt ist. Der Reversierantrieb 64 kann ein separater Reversiermotor sein, der nur zum Reversieren mit dem Einzugsförderer 42 und der Querförderschnecke 36 in Antriebsverbindung gebracht wird, oder es handelt sich um einen Motor, der auch im Erntebetrieb einen Teil oder die gesamte Antriebskraft zum Antrieb der Querförderschnecke 36 und des Rotors 52 des Gutaufnehmers 34 und ggf. auch des Einzugsförderers 42 bereitstellt.

In der Figur 1 hat die Steuerung 62 auf Veranlassung des Bedieners den Verstellantrieb 60 veranlasst, den Gutaufnehmer 34 in die dargestellte, erste Stellung zu verbringen, die zum Erntebetrieb dient. Der Höhenverstellantrieb 48 hält den Erntevorsatz 20 in einer derartigen Höhe, so dass die Stützräder 38 sich mit einer vorbestimmten Kraft auf dem Erdboden abstützen. Der Rotor 52 des Gutaufnehmers 34 dreht sich im Erntebetrieb im Uhrzeigersinn, während die Querförderschnecke 36 sich dazu gegensinnig dreht. Die dargestellte erste Stellung des Gutaufnehmers 34 ermöglicht einen an sich bekannten Erntebetrieb.

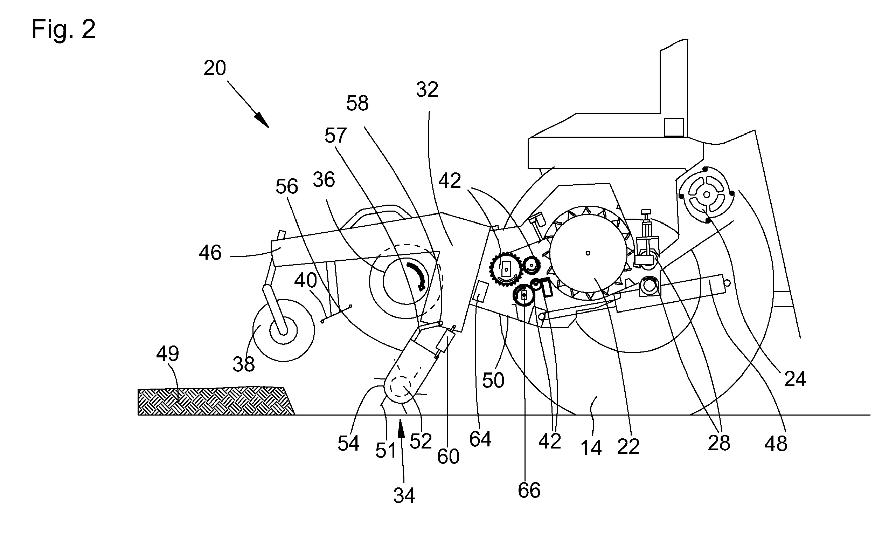

Falls ein innerhalb einer Vorpresswalze des Einzugsförderers 42 angeordneter Fremdkörperdetektor 66 einen mit dem Erntegut aufgenommenen Fremdkörper (z. B. einen Stein oder ein Eisenteil) nachweist, leitet die mit dem Fremdkörperdetektor 66 verbundene Steuerung 62 selbsttätig einen Reversiervorgang ein. Dazu wird zunächst der Höhenverstellantrieb 48 ausgefahren, so dass der Erntevorsatz 20 um die Drehachse der Häckseltrommel 22 gedreht und angehoben wird. Anschließend oder gleichzeitig wird der Verstellantrieb 60 eingefahren, so dass der Gutaufnehmer 34 mit dem Rotor 52, dem Gehäuse 54 und dem Deckblech 56 im Gegenuhrzeigersinn um die Schwenkachse 58 nach unten in die in Figur 2 dargestellte, zweite Stellung gedreht wird. Diese Vorgänge können auch auf eine manuelle Eingabe durch den Bediener oder einen Nachweis eines Erntegutstaus hin ausgeführt werden. Wenn nun der Reversierantrieb 64 durch den Bediener oder die Steuerung 62 aktiviert wird, kann das von der Querförderschnecke 36 ausgeworfene Erntegut problemlos, d. h. ohne nennenswerte Behinderung durch den Gutaufnehmer 34, auf den Erdboden fallen. Dabei dreht sich der Rotor 52 des Gutaufnehmers 34 vorzugsweise nicht, da er durch einen Freilauf mit dem Antrieb der Querförderschnecke 36 antriebsverbunden ist. Nach Beendigung des Reversiervorgangs, insbesondere nach einer Eingabe des Bedieners, Ablauf einer vorbestimmten Reversierzeit oder einem Signal vom Fremdkörperdetektor 66, dass der Fremdkörper ausgeworfen wurde, wird der Reversierantrieb 64 deaktiviert, der Verstellantrieb 60 ausgefahren und der Höhenverstellantrieb 48 gleichzeitig oder anschließend eingefahren, so dass die in Figur 1 dargestellten Stellungen des Erntevorsatzes 20 und des Gutaufnehmers 34 wieder erreicht werden. Danach kann der Erntebetrieb fortgesetzt werden.

## Patentansprüche

1. Erntevorsatz (20) mit einem einen Gutaufnehmer (34) und eine Querförderschnecke (36) tragenden Gestell (32) und einem Verstellantrieb (60), mit dem der Gutaufnehmer (34) gegenüber dem Gestell (32) zwischen einer ersten Stellung, in welcher der Gutaufnehmer (34) aufgenommenes Erntegut an die Querförderschnecke (36) übergeben kann, und einer zweiten Stellung bewegbar ist, in welcher er gegenüber der ersten Stellung nach unten verlagert ist, **dadurch gekennzeichnet, dass** der Gutaufnehmer (34) gegenüber dem Gestell (32) um eine sich horizontal und quer zur Vorwärtsrichtung erstreckende Schwenkachse (58) schwenkbar angelenkt und durch den Verstellantrieb (60) derart weit um die Schwenkachse (58) in die zweite Stellung nach unten verschwenkbar ist, dass der Gutaufnehmer (34) bei einer reversierenden Querförderschnecke (36) den Auswurf von Erntegut nicht nennenswert behindert.

2. Erntevorsatz (20) nach Anspruch 1, **dadurch gekennzeichnet, dass** der Gutaufnehmer (34) ein mittels des Verstellantriebes (60) um die Schwenkachse (58) schwenkbares Gehäuse (54) umfasst, in dem ein mit Zinken (51) ausgestatteter Rotor (52) angeordnet ist, und dass das Gehäuse (54) ein sich in der ersten Stellung bis zur Unterseite der Querförderschnecke (36) erstreckendes Deckblech (56) aufweist.

3. Erntevorsatz (20) nach Anspruch 1 oder 2, **dadurch gekennzeichnet, dass** sich die Schwenkachse (58) des Gutaufnehmers (34) rückwärtig und unterhalb der Querförderschnecke (36) befindet.

4. Erntevorsatz (20) nach Anspruch einem der Ansprüche 1 bis 3, **dadurch gekennzeichnet, dass** der Verstellantrieb (60) mit einer Steuerung (62) gekoppelt ist, die weiterhin mit einem Reversierantrieb (64) der Querförderschnecke (36) und einem Höhenverstellantrieb (48) des Erntevorsatzes (20) verbunden und betreibbar ist, vor einer Reversierung der Querförderschnecke (36) selbsttätig den Höhenverstellantrieb (48) zu veranlassen, den Erntevorsatz (20) anzuheben, danach oder gleichzeitig den Verstellantrieb (60) zu veranlassen, den Gutaufnehmer (34) in die zweite Stellung zu verbringen und schließlich die Querförderschnecke (36) zu reversieren.

5. Landwirtschaftliche Erntemaschine (10), vorzugsweise in der Art eines Feldhäckslers, mit einem Gutaufnehmer (20) gemäß einem der Ansprüche 1 bis 4.
